# EUROPÄISCHE PATENTSCHRIFT

(11) **EP 1 514 733 B1**
(45) Veröffentlichungstag und Bekanntmachung des Hinweises auf die Patenterteilung: **15.02.2006**
(21) Anmeldenummer: 04019449.0
(22) Anmeldetag: 17.08.2004
(51) Int. Cl.: B60R 7/04

(54) **Haltevorrichtung für Gebrauchsgegenstände im Innenraum von Kraftwagen**
Article holder inside a vehicle
Dispositif pour la fixation d'objets dans un vehicule

(30) Priorität: 09.09.2003 DE 10341833
(43) Veröffentlichungstag der Anmeldung: 16.03.2005
(73) Patentinhaber: DaimlerChrysler AG, 70567 Stuttgart (DE)
(72) Erfinder: Uhlig, Frank Markus, 70193 Stuttgart (DE); Ünsal, Osman Öner, 70563 Stuttgart (DE)

(56) Entgegenhaltungen:
- EP-A- 1 028 023
- FR-A- 2 421 760
- US-A- 1 853 261

## Beschreibung

Die Erfindung betrifft eine Haltevorrichtung für Gebrauchsgegenstände im Innenraum von Kraftwagen nach dem Oberbegriff des Anspruchs 1.

Die gattungsbildende DE 199 21 599 A1 zeigt eine Haltevorrichtung für Gefäße in Kraftfahrzeugen, welche eine kastenförmige und in Richtung des zu haltenden Gefäßes mit einer konkaven Anlagefläche versehene Schiebeführung aufweist. In der Schiebeführung ist ein Schlitten auf das Gefäß zu und von diesem weg verschiebbar geführt, wobei am Schlitten ein ringförmiges Spannelement befestigt ist. Das Spannelement ist mittels des Schlittens aus der im Bereich der konkaven Anlagefläche liegenden Öffnung der Schiebeführung ein- und ausfahrbar, so dass vom freien Umfangsbereich des Spannelementes und der konkaven Anlagefläche der Schiebeführung eine über den Vorschub des Schlittens in ihrer Größe veränderbare runde Aufnahmeöffnung gebildet ist. Bei Nichtgebrauch läßt sich das Spannelement vollständig in die kastenförmige Schiebeführung einfahren. Die Schiebeführung benötigt den zur Aufnahme von Schlitten und Spannelement notwendigen Bauraum vor oder hinter der Begrenzungsfläche.

Die US-A-1 853 261 zeigt eine Schiene, an der ein elastisches Spannband angebracht ist. Zum Fixieren von Gegenständen sind auf der Schiene verschiebbare Halter vorgesehen. Die EP-A-1 028 023 offenbart ein dehnbares Spannband, dessen beide Enden festgelegt sind. Eine Variante besteht aus einem nicht dehnbaren Spannband, dessen eines Ende auf eine Federhülse aufgewickelt ist.

Aufgabe der Erfindung ist es, eine Haltevorrichtung zu schaffen, die besonders quer zur Begrenzungsfläche weniger Bauraum benötigt und in die Gebrauchsgegenstände unterschiedlicher Geometrien besser einsteckbar sind.

Gelöst wird die Aufgabe durch eine Haltevorrichtung mit den Merkmalen des Anspruchs 1.

Die Halterung der aufzunehmenden Gebrauchsgegenstände erfolgt erfindungsgemäß durch Spannen des Gegenstandes mittels Einstellung eines Spannabstandes zwischen den beiden Endabschnitten des Spannmittels. Zur Aufnahme des Gegenstandes wird zunächst der Spannabstand verkürzt, wodurch das Spannmittel weiter von der Begrenzungsfläche abragt und der Gegenstand zwischen Spannmittel und Begrenzungsfläche einführbar ist. Zum sicheren Halten des Gegenstandes wird anschließend ein größerer Spannabstand eingestellt und dadurch das Spannmittel am Gegenstand und weiterhin der Gegenstand an Schiebeführung oder Begrenzungsfläche spannend zum Anliegen gebracht. Bei dieser Spannvorrichtung sind das Spannelement, die Schiebeführung und der Schlitten in länglicher flacher Erstreckung besonders bauraumsparend entlang der Begrenzungsfläche angeordnet.

Neben kreisförmigen Geometrien der Aufnahmeöffnung des Spannelements sind beispielsweise flache Öffnungszwickel denkbar, in welche Bücher oder Straßenkarten vorteilhaft einsteckbar sind. Der schiebeblockierte Endabschnitt des Spannmittels kann einzeln an Karosserie oder Verkleidungsteil befestigt sein. Der verschiebbare Schlitten kann als seperates Bauteil oder gegebenenfalls auch einteilig mit dem Spannmittel ausgebildet sein.

Das Spannmittel ist vorzugsweise als biegefähiges Gurtsegment ausgebildet, dessen Knick- beziehungsweise Biegesteifigkeit bei Schlaufenbildung in Biegerichtung höchstens so hoch sein darf, dass bei Zusammenschieben der beiden Enden des Spannmittels eine Auslenkung zur Schlaufe erfolgt. Die Biegesteifigkeit quer zur Schlaufenkontur ist vorteilhafterweise so hoch zu wählen, dass die ausgelenkte Schlaufe von der Begrenzungsfläche abragt und damit der Gebrauchsgegenstand einfach einsteckbar ist. Beispielsweise bieten sich einteilige Gurte aus elastomeren Werkstoffen an. Die erfindungsgemäße Wirkungsweise ist ebenfalls durch ein segmentiertes Spannmittel, das vorzugsweise als Gliedergurt, gegebenenfalls aus zwei schwenkbar miteinander verbundenen Elementen, aufgebaut ist, zu erreichen.

Eine Ausführung der Haltevorrichtung weist eine an der Begrenzungsfläche verlaufende Schiene auf, an welcher einerseits die Schiebeführung des Schlittens ausgebildet oder befestigt ist, und andererseits der zweite gegen Verschieben gesicherte Endabschnitt des Spannmittels abgestützt ist. Die Schiene kann dabei an der Karosserie des Kraftwagens oder an einem Verkleidungsteil oder als seperat vor der Karosserie oder der Verkleidung montiertes Teil ausgebildet sein. Der gegen Verschieben gesicherte Endabschnitt des Spannmittels kann an einer vorgesehenen Befestigungsstelle an der Karosserie oder der Verkleidung befestigt oder gelagert sein. Stützt sich der Endabschnitt des Spannmittels jedoch entsprechend der besonderen Ausführung an der Schiene ab, kann die Haltevorrichtung mit Spannmittel und Schlitten als bauliche Einheit vormontiert werden. Der ausführungsgemäße Verlauf der Schiene entlang der Begrenzungsfläche ermöglicht eine besonders platzsparende Anordnung im geschlossenen Zustand. Weiterhin dient die hinter der Schiene angeordnete Begrenzungsfläche zusätzlich zur Schiene als Anlagefläche und damit als Abstützung für den Gegenstand, welcher auf dem zur gegenüberliegenden Seite gehörigen Teilumfang vom Spannmittel umfasst ist.

Bei einer besonderen Ausführung der Haltevorrichtung ist der zweite schiebeblockiert gehaltene Endabschnitt schwenkbar an einem Endbereich der Schiene gelagert. Wenn der Schlitten in Haltestellung ist, dreht sich Endabschnitt des Spannmittels somit beim Auslenken in der Lagerung nach außen und bildet im Vergleich zu einem an dieser Stelle gebogenen Spannmittel eine größere Einführöffnung.

Eine Ausführungsform der Haltevorrichtung weist eine schwenkbare Lagerung des mit dem Schlitten verschiebbaren Endabschnitts auf, wodurch das Spannmittel in diesem Endabschnitt frei nach außen drehen kann und damit eine größere Aufnahmeöffnung ausbildet.

Um eine besonders platzsparende Nichtgebrauchsstellung der Haltevorrichtung zu schaffen, sind bei einer besonderen Ausgestaltung die Abstützpunkte des Spannmittels an Schiene und Schlitten in etwa fluchtend mit der Schiene angeordnet und der Schlitten so weit von der Abstützung des schiebeblockierten Endabschnittes wegschiebbar, dass das Spannmittel in Nichtgebrauchsstellung eine Strecklage nahe an der Schiene einnimmt. Durch das Anliegen an der Schiene ist einerseits senkrecht zur Begrenzungsfläche ein minimales Aufbaumaß erreicht, andererseits ist das Spannmittel durch mindestens bereichsweises gegenseitiges Umfassen oder Ineinandergreifen von Schiene und Spannmittel in der Strecklage bei Nichtgebrauchsstellung quer zur Erstreckung der Schiene abgestützt.

Wird bei einer besonderen Ausführung der Haltevorrichtung die Schiene durch das Spannmittel und den Schlitten in Nichtgebrauchsstellung weitgehend überdeckt, kann ein in dieser Stellung besonders unauffälliges Erscheinungsbild erreicht werden.

Um den Gebrauchsgegenstand bei einfacher Handhabung sicher zu halten, ist der Schlitten einer Ausführungsform in seinen Haltestellungen gegen Verschieben gesichert. Dabei weist der Haltevorrichtung eine an mehreren Stellen des Schiebeweges wirksame selbsttätige Verrastung für den Schlitten auf.

Bei einer besonderen Ausgestaltung der Haltevorrichtung ist entlang der Schiebeführung eine Zahnstange führungsfest angeordnet, in welche ein korrespondierendes Rastmittel des Schlittens selbsttätig eingreift. Dabei kann das Rastmittel des Schlittens beispielsweise eine bereichsweise kongruent zur Verzahnung der Zahnstange ausgebildete Kontur sein. Eine Zahnstangenkontur ermöglicht bei entsprechend feiner Teilung eine besonders feinstufige Rastverstellmöglichkeit.

Um eine besonders einfache Handhabung zu ermöglichen, weist eine Ausführungsform der Haltevorrichtung einen Schlitten auf, dessen Verrastung durch Niederdrücken des Schlittens oder eines Betätigungs- beziehungsweise Lösebauteils des Schlittens, wie beispielsweise eines als Kipphebel ausgeführten Lösehebels, aufhebbar ist. Bei entsprechend erhobener oder muldenförmiger Ausformung der Betätigungsfläche kann mittels eines Handgriffes, beziehungsweise Fingerdrucks, die Verrastung des Schlittens drückend gelöst und der Schlitten verschoben werden.

Um die Aufweitung der Gurtschlaufe und die korrespondierenden Öffnungsgeometrien einzuschränken, sind in einer besonderen Ausgestaltung der Haltevorrichtung Anschlagmittel vorgesehen, welche den Schiebevorschub des Schlittens begrenzen. Die Anschlagmittel verhindern weiterhin ein mögliches Verklemmen der Bauteile bei zu langem Schiebeweg.

Bei einer Ausführungsart der Haltevorrichtung ist die Schiene in Einbaulage oberhalb einer Aufstandsfläche weitgehend horizontal an einer steilen Begrenzungsfläche angeordnet, so daß gehaltene Gebrauchsgegenstände vorteilhafterweise durch die steile Begrenzungsfläche seitliche und an der unter der Haltevorrichtung angeordneten Aufstandsfläche in Richtung ihrer Gewichtskraft abgestützt sind. Somit ist der Gegenstand durch linienförmige Umschlingung durch die Haltevorrichtung, Anlage an der Begrenzungswand und Stehen auf der Aufstandsfläche besonder sicher gehalten. Für eine solche Anordnung bietet sich beispielsweise die horizontale Montage der Haltevorrichtung am Mitteltunnel oder der Mittelkonsole im vorderen Fußraum an.
Weitere Vorteilhafte Ausführungen der Haltevorrichtung ergeben sich aus der Zeichnung und deren Beschreibung.

In der Zeichnung ist ein Ausführungsbeispiel der Haltevorrichtung dargestellt. Dabei zeigen:
- Fig. 1: eine Darstellung einer seitlichen Ansicht der Haltevorrichtung in Nichtgebrauchsstellung mit Ansichtsrichung entlang der Begrenzungsfläche und quer zur Schiebeführung,
- Fig. 2: eine Darstellung der Haltevorrichtung entsprechend Fig.1 in Aufnahme- oder Spannstellung,
- Fig. 3: eine Darstellung einer Ansicht auf die Haltevorrichtung rechtwinklig zur Begrenzungsfläche,
- Fig. 4: eine Schnittdarstellung der Haltevorrichtung entlang der Linie IV-IV in Fig.3 und
- Fig. 5: eine Schnittdarstellung entlang der Linie V-V in Fig.4.

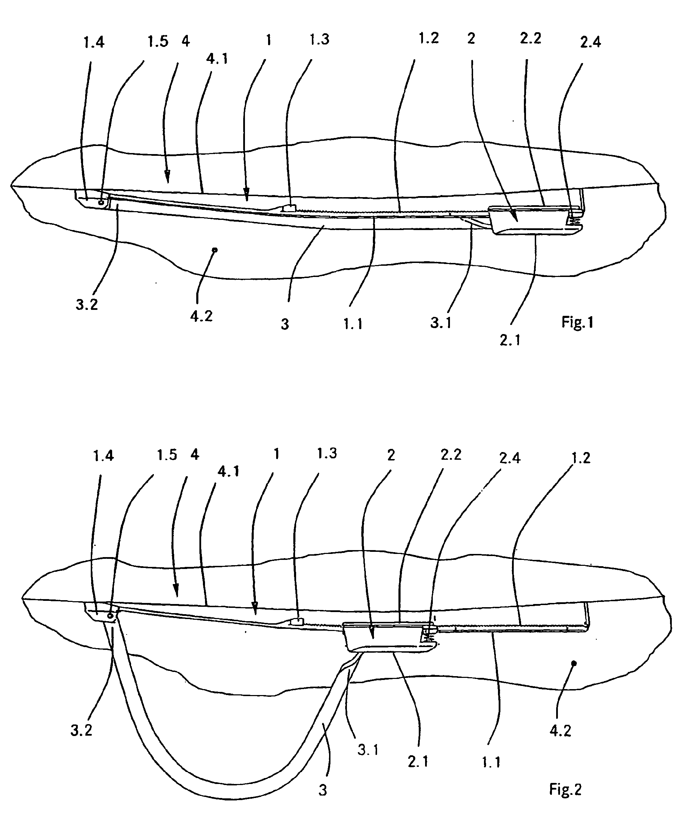

Fig. 1 zeigt eine Darstellung der Haltevorrichtung mit der Schiene 1 der Haltevorrichtung, welche eine als T-Profilleiste ausgebildete Schiebeführung 1.1 aufweist, an deren dem Innenraum abgewandten Seite eine Zahnstange 1.2 ausgebildet ist. Die Schiebeführung 1.1 der Schiene 1 erstreckt sich über einen Teilbereich der länglichen Erstreckung der Schiene. Der Teilbereich erstreckt sich von einem Endabschnitt der Schiene über ungefähr zwei Drittel ihrer länglichen Erstreckung bis zu dort angeordneten Anschlagmitteln 1.3.

An der Schiebeführung 1.1 der Schiene 1 läuft ein Schlitten 2, welcher ein dem Innenraum zugewandtes Oberteil 2.1 und ein das T-Profil der Schiebeführung 1.1 in zwei Teilbereichen umfassendes Unterteil 2.2 umfaßt. Der Schlitten weist weiterhin ein in dieser Figur nicht dargestelltes Gleitstück auf, das von einer Feder 2.4 an der Oberfläche der Schiebeführung 1.1 angedrückt wird und dadurch die Schiebebewegung dämpft. Weiterhin wird durch die Feder 2.4 das um die Schiebeführung greifende Unterteil 2.2 des Schlittens 2 mit einer in dieser Figur nicht gezeigten Verzahnung in die korrespondierende Zahnstange 1.2 der Schiene 1 gedrückt. Am Schlitten 2 ist das gurtförmige Spannmittel 3 mit einem ersten Endabschnitt 3.1 schwenkbar gelagert. Der dem Endabschnitt 3.1 entgegengesetzte zweite Endabschnitt 3.2 ist in einer Drehlagerung 1.5, welche in einem als Lagerbock ausgebildeten Endabschitt 1.4 der Schiene 1 angeordnet ist, gehalten. In der dargestellten Nichtgebrauchsstellung befindet sich der Schlitten 2 der Haltevorrichtung am dem dortigen Endabschnitt der Schiene 1 zugewandten Endbereich der Schiebeführung 1.1. Das Spannmittel 3 wird in dieser Stellung des Schlittens 2 zwischen der Lagerung 1.5 des zweiten Endabschnitts 3.2 und der schwenkbaren Lagerung des ersten Endabschnitts 3.1 im Schlitten flach entlang der Schiene 1 gespannt und legt sich an dieser an. Die Haltevorrichtung aus Schiene 1, Schlitten 2 und Spannmittel 3 benötigen somit in Nichtgebrauchsstellung einen minimalen Bauraum quer zur Begrenzungsfläche 4.1.

Figur 1 zeigt die Haltevorrichtung in Einbaulage im montierten Zustand. Die Blickrichtung der Darstellung in Fig.1 ist in Einbaulage von oben entlang der Begrenzungsfläche 4.1 steil nach unten gerichtet. Die Begrenzungsfläche 4.1 bildet den seitlichen Abschluß eines in diesem Bereich steil aufragenden Verkleidungsteils 4. Die mit ihrer Schiene 1 an der Begrenzungsfläche 4.1 bündig befestigte Haltevorrichtung ist in ihrer länglichen Erstreckung in Einbaulage ungefähr horizontal entlang der Begrenzungsfläche 4.1 angeordnet. Dabei ist die Schiene 1 mittels eines Schiebehakens und zweier Verschraubungen am Verkleidungsteil 4 beziehungsweise der dahinter angeordneten Karosserie befestigt. Die Befestigung kann auch mit anderen Festlegungselementen wie Dübeln, Clipsen oder auch mittels Verkleben oder Verschweißen erfolgen. In Einbaulage unter der Haltevorrichtung ist das Verkleidungsteil abgewinkelt und bildet eine etwa horizontale Aufstandsfläche 4.2.

In Fig.2 ist die Haltevorrichtung in einer der Fig.1 entsprechenden Ansicht dargestellt, wobei auf der Schiebeführung 1.1 der Schiene 1 der Schlitten 2 in eine Aufnahme- beziehungsweise Spannposition geschoben ist. Hierzu wurde ausgehend von der in Fig. 1 dargestellten Nichtgebrauchsstellung der Schlitten in Richtung der Begrenzungsfläche 4.1 gegen die Federkraft der Feder 2.4 niedergedrückt und dadurch die in dieser Darstellung nicht dargestellten Zahnsegmente am Unterteil 2.2 des Schlittens 2 aus dem Eingriff mit der Zahnstange 1.2 gebracht. Der niedergedrückt frei verschiebbare Schlitten 2 wurde anschließend in die dargestellte Schiebeposition verbracht und losgelassen, so daß die Verzahnungen an Schlitten 2 und Zahnstange 1.2 der Verzahnung wieder sperrend ineinandergreifen.

Durch die Verschiebung des Schlittens 2 weisen die Lagerung des ersten Endabschnitts 3.1 des Spannmittels 3 im Schlitten 2 und die Lagerung 1.5 des zweiten Endabschnitte 3.2 am Schienenende 1.4 einen im Vergleich zur Nichtgebrauchsstellung geringeren Abstand auf. Durch den verkürzten Abstand der beiden Endabschnitte 3.1 und 3.2 wird das Spannmittel von der Begrenzungsfläche 4.1 weg zum Innenraum des Fahrzeugs hin gebogen. Dadurch bildet das Spannmittel 3 eine Schlaufe in welche Gebrauchsgegenstände, wie Getränkeflaschen, Getränkekartons, Bücher oder Karten einstellbar sind. Um die Gebrauchsgegenstände sicher zu halten wird ausgehend von der Aufnahmestellung die Haltevorrichtung, beziehungsweise der Schlitten 2 in eine Spannstellung gebracht, in welcher der Abstand der beiden Endbereiche 3.1 und 3.2 des Spannmittels auf einen auf die Größe des zu haltenden Gegenstandes abgestimmten Spannabstand eingestellt wird. Dabei wird die Spannstellung des Schlittens 2 derart gewählt, das das Spannmittel den Gegenstand bereichsweise umfängt, beziehungsweise, falls dies Form des Gegenstandes und Verformbarkeit des Spannmittels zulassen, bereichsweise umschlingt und mit ausreichender Kraft an der Schiene 1 oder der Begrenzungsfläche 4.1 andrückt. Der Spannabstand ist dabei immer größer als der zum Einführen des Gegenstandes notwendige Aufnahmeabstand. Ein maximaler Aufnahmequerschnitt der Spannmittelschlaufe ergibt sich bei einem durch die an der Schiebeführung angeordneten Anschlagmittel 1.3 begrenzten minimalen Aufnahmeabstand.

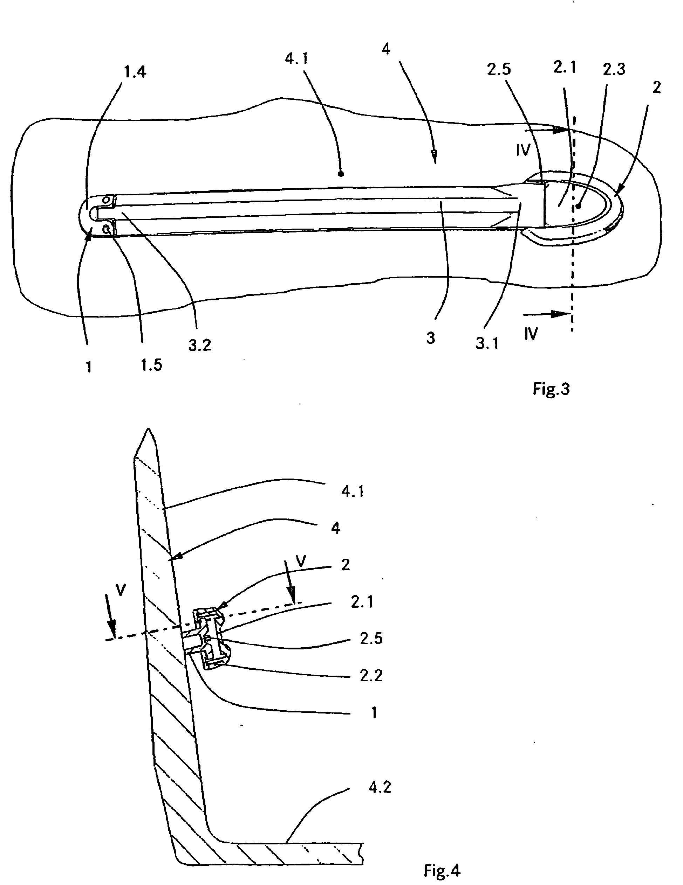

Fig. 3 zeigt eine Darstellung einer Ansicht der Haltevorrichtung mit Blickrichtung auf die Begrenzungsfläche 4.1. Der Schlitten 2 ist an das der Lagerung 1.5 des zweiten Endabschnitts 3.2 abgewandte Ende der in dieser Darstellung nicht gezeigten Schiebeführung der Schiene 1 geschoben. Die Haltevorrichtung ist somit in Nichtgebrauchsstellung, wobei sich das Spannmittel 3 entlang der Schiene 1 anlegt. Bis auf den Lagebock 1.4 zur Aufnahme des Endabschnitts 3.2 des Spannmittels 3 ist in der Nichtgebrauchsstellung die Schiene 1 mit ihrer Schiebeführung in der gezeigten Blickrichtung auf die Begrenzungsfläche 4.1 des Verkleidungsteils 4 vollständig vom Spannmittel 3 und dem Schlitten 2 überdeckt. Das Spannmittel 3 ist mit seinem Endabschnitt 3.1 in einer von einem Lagerstift und passenden Aufnahmebohrungen gebildeten Schwenklagerung 2.5 im Oberteil 2.2 des Schlittens 2 gelagert. Das Oberteil 2.2 des Schlittens weist eine muldenförmige Vertiefung auf, welche als Betätigungsfläche 2.3 fungiert. Die muldenförmige Vertiefung der Betätigungsfläche 2.3 bietet zum Verschieben des Schlittens nach Lösen der Verrastung durch Niederdrücken Abstützung an den sie seitlich begrenzenden Wulsten.

Fig. 4 Zeigt den Schnitt entlang der Linie IV-IV in Fig. 3. Die Bauteile sind in Einbaulage dargestellt, wobei die Blickrichtung horizontal annähernd entlang der Schiene gerichtet ist. Die Begrenzungsfläche 4.1 bildet den Abschluß des steil aufragenden Teilbereichs des Verkleidungsteils 4 in Richtung des Innenraums. Am unteren abgewinkelt verlaufenden Bereich des Verkleidungsteils begrenzt eine flache Aufstandsfläche 4.2 das Verkleidungsteil nach oben. Die Schiene 1 ist bündig an der Begrenzungsfläche 4.1 oberhalb der Aufstandsfläche 4.2 angeordnet. In die Haltevorrichtung eingeführte Gebrauchsgegenstände stehen bei ausreichender Größe zum sicheren Halten auf der Aufstandsfläche 4.2 und werden in der Haltevorrichtung verspannt.

Die Schiene 1 der Haltevorrichtung weist im Schnitt einen T-förmigen Querschnitt auf, der zur verbesserten Abstützung an der Begrenzungsfläche zweistielig ausgeführt ist. Der Schlitten 2 umfängt mit seinem Unterteil 2.2 die zwei seitlich abragenden Stege des T-Profils der Schiene 1 und stützt sich gegenüberliegend an der dem Innenraum zugewandten Seite des Profils mit dem Oberteil 2.1 beziehungsweise mit dem durch eine Feder gegen die Schiene 1 gedrückten Gleitstück 2.5 ab.

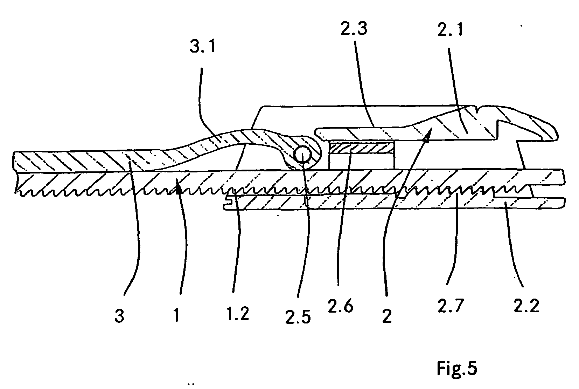

Fig.5 zeigt eine Detailansicht aus der Schnittdarstellung entlang der Linie V-V in Fig. 4. Der seitlich von der Schiene 1 abragende Steg des T-Profils weist an seiner der Begrenzungsfläche zugewandten Seite eine als Zahnstange 1.2 ausgeführte Verzahung auf. Der Schlitten 2 umfaßt den Steg der Schiene 1 mit seinem Unterteil 2.2 das wiederum eine zur Verzahnung der Schiene 1 annähernd kongruente negative Verzahnung aufweist. Der Schlitten 2 bringt die Verzahnung des Schlittenunterteils 2.2 mittels der zwischen in dieser Darstellung nicht dargestellter Gleitzunge des Gleitstückes und Schlittenoberteil 2.1 wirkenden nicht gezeigten Feder selbsttätig in Eingriff. An seiner dem Innenraum zugewandten Seite weist der Schlitten 2 an seinem Oberteil 2.1 eine muldenförmig ausgebildete Betätigungsfläche 2.3 auf. Das Spannmittel 3 ist im Schlitten in einer Lagerung 2.5 schwenkbar gelagert. Die Lagerung 2.5 weist einen in Aufnahmeöffnungen in Schlittenoberteil 2.1 einerseits und Endabschnitt 3.1 andereseits gehaltenen Lagerstift auf.

## Patentansprüche

1. Haltevorrichtung für Gebrauchsgegenstände im Innenraum von Kraftwagen mit einer an einer Begrenzungsfläche des Innenraumes angeordneten Schiebeführung (11), entlang der ein mit einem gurtförmigen Spannmittel (3) verbundener Schlitten (2) läuft, über dessen Vorschub das Spannmittel (3) in eine den Gebrauchsgegenstand an einem Umfangsbereich umschlingende Haltestellung überführbar ist, wobei das Spannmittel (3) zwei entgegengesetzte Endabschnitte (3.1, 3.2) aufweist, von denen ein erster Endabschnitt mit dem Schlitten (2) verschiebebewegbar ist, **dadurch gekennzeichnet, dass** der zweite Endabschnitt (3.2) in der Haltestellung in einem Spannabstand zum ersten Endabschnitt (3.1) gegen Verschieben gesichert und der Spannabstand durch Verschieben des Schlittens (2) auf den jeweils aufzunehmenden Gebrauchsgegenstand einstellbar ist.

2. Haltevorrichtung nach Anspruch 1,
**dadurch gekennzeichnet,**
**dass** die Schiebeführung (1.1) als Bestandteil einer entlang der Begrenzungsfläche (4.1) verlaufenden Schiene (1) ausgebildet ist, wobei der zweite Endabschnitt (3.2) des Spannmittels (3) an der Schiene (1) gehalten ist.

3. Haltevorrichtung nach Anspruch 2,
**dadurch gekennzeichnet,**
**dass** der zweite Endabschnitt (3.2) des Spannmittels (3) schwenkbar an einem Endbereich der Schiene (1) gelagert ist.

4. Haltevorrichtung nach Anspruch 1,
**dadurch gekennzeichnet,**
**dass** der erste Endabschnitt (3.1) des Spannmittels (3) schwenkbar am Schlitten (2) gelagert ist.

5. Haltevorrichtung nach Anspruch 1,
**dadurch gekennzeichnet,**
**dass** das Spannmittel (3) in seiner Nichtgebrauchsstellung in einer Strecklage nahe der Schiene (1) gehalten ist.

6. Haltevorrichtung nach Anspruch 5,
**dadurch gekennzeichnet,**
**dass** die Schiene (1) der Haltevorrichtung in ihrer Nichtgebauchsstellung weitgehend von Spannmittel (3) und Schlitten (2) überdeckt ist.

7. Haltevorrichtung nach Anspruch 1,
**dadurch gekennzeichnet,**
**dass** der Schlitten (2) über seinen Schiebeweg in mehreren Stellungen selbsttätig verrastend ausgebildet ist.

8. Haltevorrichtung nach Anspruch 7,
**dadurch gekennzeichnet,**
**dass** zur feinstufigen Verrastung des Schlittens (2) auf der Schiebeführung (1.1) mindestens eine Zahnstange (1.2) vorgesehen ist, in welche ein korrespondierendes Rastmittel (2.7) des Schlittens (2) eingreift.

9. Haltevorrichtung nach Anspruch 7,
**dadurch gekennzeichnet,**
**dass** die Verrastung des Schlittens (2) durch Niederdrücken eines Betätigungselementes, insbesondere des Schlittens (2) selber, gegen eine Federkraft aufzuheben ist.

10. Haltevorrichtung nach Anspruch 1,
**dadurch gekennzeichnet,**
**dass** der Schiebevorschub zum Aufweiten des Spannmittels (3) durch Anschlagmittel (1.3) begrenzt ist.

11. Haltevorrichtung nach Anspruch 1,
**dadurch gekennzeichnet,**
**dass** die Haltevorrichtung in Einbaulage oberhalb einer Aufstandsfläche (4.2) für Gebrauchsgegenstände im wesentlichen horizontal an einer steilen Begrenzungsfläche (4.1) angeordnet ist.

## Claims

1. Holding device for articles for everyday use in the interior of motor vehicles with a slide guide (1.1) which is arranged on a delimiting surface of the interior and along which a slide (2) connected to a belt-shaped clamping means (3) runs, via the advance of which slide the clamping means (3) can be transferred into a holding position looping around the article for everyday use on a peripheral region, the clamping means (3) comprising two opposite end portions (3.1, 3.2) of which a first end portion is slidingly movable with the slide (2), **characterized in that** the second end portion (3.2) is in the holding position secured against displacement at a clamping spacing from the first end portion (3.1) and the clamping spacing can be adjusted to the article for everyday use to be received in each case by displacing the slide (2).

2. Holding device according to Claim 1, **characterized in that** the slide guide (1.1) is designed as a component of a rail (1) extending along the delimiting surface (4.1), the second end portion (3.2) of the clamping means (3) being held on the rail (1).

3. Holding device according to Claim 2, **characterized in that** the second end portion (3.2) of the clamping means (3) is mounted pivotably on an end region of the rail (1).

4. Holding device according to Claim 1, **characterized in that** the first end portion (3.1) of the clamping means (3) is mounted pivotably on the slide (2).

5. Holding device according to Claim 1, **characterized in that** the clamping means (3) is in its non-use position held in an extended position close to the rail (1).

6. Holding device according to Claim 5, **characterized in that** the rail (1) of the holding device is in its non-use position largely covered by clamping means (3) and slide (2).

7. Holding device according to Claim 1, **characterized in that** the slide (2) is designed to lock automatically in a number of positions over its sliding travel.

8. Holding device according to Claim 7, **characterized in that** at least one rack (1.2), in which a corresponding catching means (2.7) of the slide (2) engages, is provided on the slide guide (1.1) for fine-stepped locking of the slide (2).

9. Holding device according to Claim 7, **characterized in that** the locking of the slide (2) can be discontinued by pressing an actuating element, in particular the slide (2) itself, down counter to a spring force.

10. Holding device according to Claim 1, **characterized in that** the sliding advance for expanding the clamping means (3) is limited by stop means (1.3).

11. Holding device according to Claim 1, **characterized in that** the holding device is in the fitted position arranged above a standing surface (4.2) for articles for everyday use essentially horizontally on a steep delimiting surface (4.1).

## Revendications

1. Dispositif de fixation pour des objets usuels dans l'habitacle de véhicules, comprenant une glissière (1.1) disposée sur une surface de limitation de l'habitacle, le long de laquelle glisse un chariot (2) connecté à un moyen de serrage (3) en forme de sangle, dont l'avance permet de déplacer le moyen de serrage (3) dans une position de fixation entourant l'objet usuel au niveau d'une région de son pourtour, le moyen de serrage (3) présentant deux portions d'extrémité opposées (3.1, 3.2) dont une première portion d'extrémité peut se déplacer par coulissement avec le chariot (2), **caractérisé en ce que** la deuxième portion d'extrémité (3.2) est fixée contre tout coulissement dans la position de fixation à une distance de serrage de la première portion d'extrémité (3.1) et la distance de serrage peut être ajustée à chaque objet usuel à recevoir par coulissement du chariot (2).

2. Dispositif de fixation selon la revendication 1, **caractérisé en ce que** la glissière (1.1) est réalisée sous forme de constituant d'un rail (1) s'étendant le long de la surface de limitation (4.1), la deuxième portion d'extrémité (3.2) du moyen de serrage (3) étant fixée sur le rail (1).

3. Dispositif de fixation selon la revendication 2,
**caractérisé en ce que** la deuxième portion d'extrémité (3.2) du moyen de serrage (3) est montée de manière à pouvoir pivoter sur une région d'extrémité du rail (1).

4. Dispositif de fixation selon la revendication 1,
**caractérisé en ce que** la première portion d'extrémité (3.1) du moyen de serrage (3) est montée de manière à pouvoir pivoter sur le chariot (2).

5. Dispositif de fixation selon la revendication 1,
**caractérisé en ce que** le moyen de serrage (3) est fixé dans sa position de non utilisation dans une position de parcours à proximité du rail (1).

6. Dispositif de fixation selon la revendication 5,
**caractérisé en ce que** le rail (1) du dispositif de fixation est essentiellement recouvert par le moyen de serrage (3) et le chariot (2) dans sa position de non utilisation.

7. Dispositif de fixation selon la revendication 1,
**caractérisé en ce que** le chariot (2) est réalisé avec un auto-encliquetage dans plusieurs positions sur sa course de coulissement.

8. Dispositif de fixation selon la revendication 7,
**caractérisé en ce que** pour un enclenchement à pas serré du chariot (2) sur la glissière (1.1), on prévoit au moins une crémaillère (1.2) dans laquelle vient en prise un moyen d'enclenchement correspondant (2.7) du chariot (2).

9. Dispositif de fixation selon la revendication 7,
**caractérisé en ce que** l'enclenchement du chariot (2) peut être supprimé en enfonçant un élément d'actionnement, notamment le chariot (2) lui-même, à l'encontre d'une force de ressort.

10. Dispositif de fixation selon la revendication 1,
**caractérisé en ce que** l'avance de coulissement pour l'écartement du moyen de serrage (3) est limitée par des moyens de butée (1.3).

11. Dispositif de fixation selon la revendication 1,
**caractérisé en ce que** le dispositif de fixation est disposé dans la position de montage au-dessus d'une surface de pose (4.2) pour des objets usuels, essentiellement horizontalement sur une surface de limitation raide (4.1).
